(19) Europäisches Patentamt / European Patent Office / Office européen des brevets

(11) **EP 1 646 133 B1**

(12) **EUROPEAN PATENT SPECIFICATION**

(45) Date of publication and mention
of the grant of the patent:
**12.12.2012 Bulletin 2012/50**

(51) Int Cl.:
*H02M 3/335* (2006.01)   *H02M 3/337* (2006.01)
*H02M 1/00* (2007.01)

(21) Application number: **05022044.1**

(22) Date of filing: **10.10.2005**

(54) **Method for controlling a full bridge converter with a current-doubler and corresponding digital controller**

Verfahren zur Regelung eines Vollbrückenumrichters mit Stromverdoppler und einem dazugehörigen digitalen Regler

Procédé de commande d'un convertisseur à pont integral avec un doubleur de courant et un régulateur numerique correspondant

(84) Designated Contracting States:
**DE FR GB IT**

(30) Priority: **11.10.2004 EP 04425760**

(43) Date of publication of application:
**12.04.2006 Bulletin 2006/15**

(73) Proprietor: **STMicroelectronics Srl**
**20864 Agrate Brianza (IT)**

(72) Inventors:
• **Garcea, Giovanni**
  **20123 Milano (IT)**
• **Ghioni, Massimo**
  **20123 Milano (IT)**
• **Beia, Christian**
  **21010 Arsago Seprio (Varese) (IT)**
• **Saggini, Stefano**
  **20097 San Donato Milanese (Milano) (IT)**
• **Villa, Francesco**
  **20133 Milano (IT)**

(74) Representative: **Ferrari, Barbara**
**Botti & Ferrari S.r.l.**
**Via Cappellini, 11**
**20124 Milano (IT)**

(56) References cited:
**US-A1- 2004 136 209    US-B1- 6 400 580**
**US-B1- 6 469 481**

EP 1 646 133 B1

**Description**

<u>Field of application</u>

The present invention relates to a method for controlling a Full Bridge converter with a Current-Doubler.

The invention also makes reference to a digital controller for a Full Bridge converter with Current-Doubler.

The invention particularly, but not exclusively, relates to a method for controlling an output voltage of the Full Bridge converter by regulating the difference of the currents flowing in a pair of inductors of the Current Doubler block by regulating a reference voltage and the following description is made with reference to this field of application by way of illustration only.

<u>Prior art</u>

As it is well known, the classical modulation PSM consists in driving two half-bridges of a Full-Bridge converter with fixed duty-cycle, of value close to 50% so as to have symmetrical losses by conduction between the four switches of a primary winding. In any case the duty-cycles of the two half-bridges must be as much more identical as possible since, in case of use of Current-Doubler with a secondary winding, an asymmetry thereof would reflect in a difference between the currents of the filter inductances.

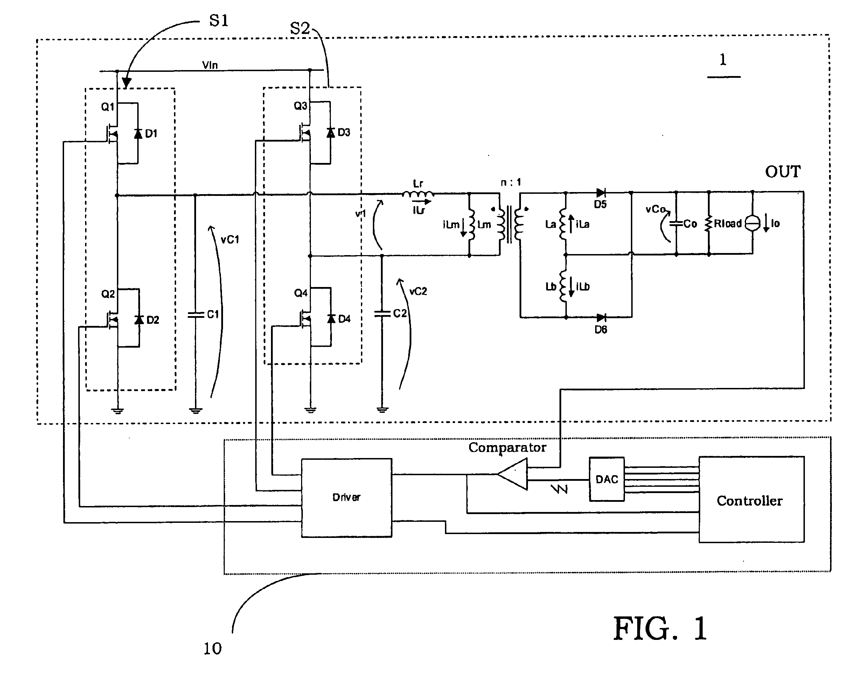

By turning on the two diagonals of the two half-bridges alternatively, for each switch period four main operation states of the Full-Bridge converter are obtained. With reference to Figure 1, in the two states wherein a high-side switch (Q 1 or Q3) of a half-bridge (S 1 or S2) and a corresponding low-side switch (respectively Q4 or Q2) of the other half-bridge (S2 or S1) of the Full-Bridge converter 10 are on, i.e. the turn-on of one of the two diagonals, energy transfer towards an output terminal OUT occurs.

The other two states occur when either the two high-side switches (Q1 and Q3) or the two low-side switches (Q2 and Q4) are on. In this situation there is no energy transfer towards the output terminal and the current of the primary recirculates in the upper or lower mesh of the Full Bridge converter 1.

By modulating the ratio between the duration of the transfer periods and the duration of the recirculation periods, a variation of the output voltage is obtained. This is exactly the mechanism exploited in the converters realised according to the prior art to obtain the output voltage regulation.

In a system with analogue control the output voltage, as regulated variable, is fed back at the input of an error amplifier, so as to obtain a control variable which allows to shift in phase the two waves PWM controlling the two half-bridges S1 and S2.

A classical digital control provides to convert the output voltage into a digital magnitude and to obtain, downstream of a digital regulator, a quantized phase shift between the two waves PWM.

As it is known, the precision required by the application determines the resolution of an input connected converter A/D.

So as not to have evident limit cycles, the digital modulator PWM should exhibit a higher resolution than that previously calculated. In practice the number of discrete phase shift values the converter A/D will be supplied with are to be determined.

The solutions adopted up to now are based on a current-mode control. For such known solutions it occurs that the analogic front-end appear to be inadequate under circuital complexity aspect. The voltage control systems are instead simpler, but they cannot provide a current-sharing control.

In fact the only tie the electric network realising the Current-Doubler imposes is that the sum of the currents in the two filter inductances is equal to the load current. It is evident that any asymmetry of the system would lead to have different currents.

Thus, up to now, the Current-Doubler has been used in systems with current control. If only a control with peak current is considered (but this is also valid for controls with mean current) this implies the need of reading the absolute value of two currents by means of a trans-impedance circuit, and then of comparing them with an analogue voltage reference suitably generated by the controller.

To such purpose, if the controller is of the digital type, a converter D/A is used.

A similar solution is described in the US Patent Application N. 2004/0136209, in the name of Renesas Technology Corp. which relates to a switching power supply device and to a corresponding semiconductor integrated circuit for power supply control. In this patent application, a DC-DC converter is described which comprises a transformer for voltage conversion, a synchronous rectifier circuit at the secondary side, and a full-bridge switching circuit at the primary side. In particular, synchronous rectifier circuit is comprised in a current controller including an error amplifier which compares the output voltage Vout with a reference voltage Vref and outputs a voltage Verr corresponding to a potential difference. Then, a comparator compares the voltage Verr with a voltage Vsns as detected by a sense resistor and determines which is higher while a PWM control circuit comprised in the control circuit provides a control mechanism able to keep the output voltage Vout constant. Then, the switching circuit is opportunely used to transmit power from the primary side to the secondary side and then to short-circuit the secondary coil even if the primary coil is activated.

The US Patent Application N. 2004/0136209 therefore discloses a method for controlling a full bridge converter with a current-doubler of the type comprising at least a first and a second half-bridge of diodes connected to respective control transistors, the method comprising the steps of:

- detecting a reference value;

- comparing, instant by instant, that reference value with an output voltage value of converter

- carrying out a switching from a transfer phase to an energy recirculation phase in correspondence with instants when that output voltage value reaches that reference value.

Another known solution is described in the US Patent N. 6,400,580, in the name of Bowman et al. wherein it is disclosed a system and a method for reducing a DC magnetic flux bias in a transformer and a power converter employing the system or the method and having a full bridge switching circuit coupled across a primary winding of a transformer and a hybridge rectifier circuit coupled across a secondary winding of the transformer. The system includes a sensor configured to develop a signal representing the DC magnetic flux bias in the transformer and a controller, coupled to the sensor and configured to operate the full bridge switching circuit as a function of the signal thereby reducing the DC magnetic flux bias.

Nevertheless, both of these solutions have the drawbacks that the instant of switching from the energy transfer phase to the recirculation energy phase is not the same of the instant of switching of the comparator which compares the output voltage with a reference voltage.

It is also known how to read a current value, like the current flowing in a current doubler. An example is reported in the US Patent N. 6,469,481, in the name of Kabushiki Kaisha Toyoda Jidoshokki Seisakusho, which describes an RC series circuit being in parallel with an inductor which is in turn coupled to a detection circuit able to detect inductor current based on the applied voltage.

It is remarked that this last solution cannot be used to provide a current to control the reference voltage of a comparator, like the ones described in the US Patent Application N. 2004/0136209 and US Patent N. 6,400,580.

The technical problem underlying the present invention is that of providing a method for controlling a Full Bridge converter with a Current-Doubler, having such structural and functional characteristics as to overcome the limits and the drawbacks still affecting the devices realised according to the prior art.

Summary of the invention

The solution idea underlying the present invention is that of controlling a peak value of an output voltage of the Full Bridge converter with a Current-Doubler by using a reference voltage.

In particular, the reference voltage is regulated in such a way to control the difference between the currents flowing in inductances of the Current-Doubler.

On the basis of such solution idea the technical problem is solved by a control method as previously indicated and defined by the claim 1. Preferred embodiments are defined in the dependent claims.

The problem is also solved by a digital controller as previously indicated and defined by the claim 8.

The characteristics and advantages of the method and of the digital controller according to the invention will be apparent from the following description of embodiments thereof given by way of indicative and non-limiting example with reference to the annexed drawings.

Brief description of the drawings

In such drawings:

Figure 1 schematically shows a Full Bridge converter equipped with a digital controller according to the invention;

Figures 2 and 3 schematically show control signals of control MOS transistors comprised in the Full Bridge converter of Figure 1;

Figure 4 schematically shows, in blocks, a control loop suitable to implement the control method according to the invention;

Figures 5 and 6 show the representations of the root locus of the control loop of Figure 4;

Figure 7 schematically shows a digital controller according to the invention;

Figures 8 and 9 schematically show the pattern of wave forms relative to the controller of Figure 7;

Figure 10 schematically shows, in blocks, the operation principle of the digital controller of Figure 7;

Figure 11 schematically shows the pattern of wave forms relative to the controller of Figure 7;

Figure 12 shows, in greater detail, a portion of the controller of Figure 7;

Figures 13 and 14 schematically show the progress of wave forms relative to the portion of Figure 12.

Detailed description

With reference to such figures, and in particular again to Figure 1 already described in relation to the prior art, 10 globally and schematically indicates a digital controller associated with a Full Bridge converter.

Advantageously according to the invention, the digital controller 10 realises the regulation of the output voltage according to the control method according to the present invention.

In particular, a reference value supplied by a converter D/A is compared instant by instant with the output voltage. During the energy transfer periods, i.e. during the turn-on of the control transistors Q 1 and Q4 or Q2 and Q3 of the Full Bridge converter 1, the voltage increases. Thus the instants are used wherein the output voltage reaches the reference value for switching from a transfer phase to an energy re-circulation phase, i.e. the transistors Q1 and Q3 or Q2 and Q4 are turned on. In such way a control is realised of the peak voltage. The two diagonals must be activated in an alternate way, i.e. the energy transfer cannot be realised with the turn-on of the transistors MOS of the same diagonal for two consecutive times.

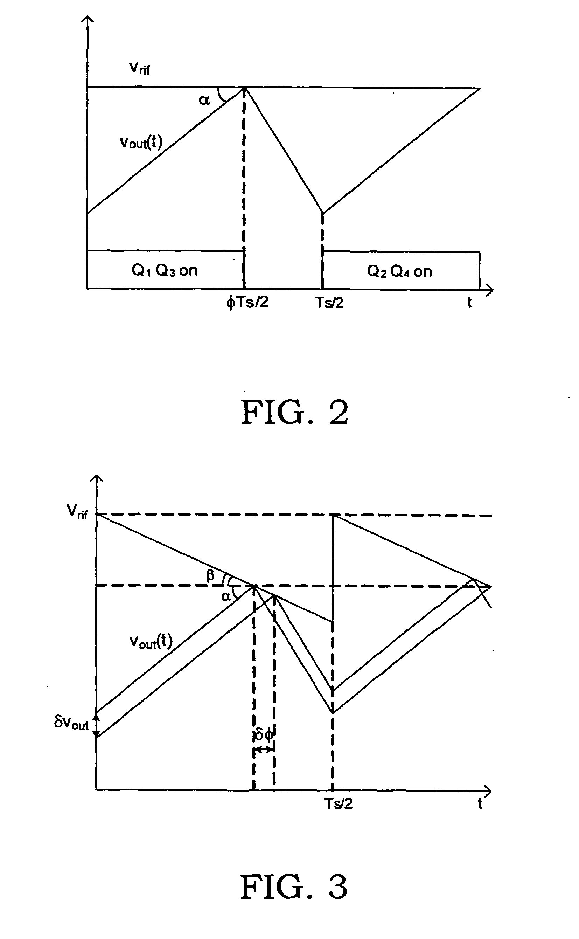

As shown in Figure 2, the switches occur in a synchronous way when the output voltage overcomes the reference, but asynchronously with a system clock signal; in this way having a discrete number of suppliable phase shifts and use of a digital modulator PWM is avoided.

The switch instead from recirculation periods to energy transfer periods occurs in a synchronous way with the system clock. The two switches at issue will occur, respectively, at the beginning and in the middle of the switching period. In this way an absolutely fixed switching frequency is obtained.

Even the energy recirculation intervals should occur in an alternate way. Definitively, the driving of the MOS transistors should cyclically occur in one of the following ways:

- turning-on of Q1 and Q4; turning-on of Q1 and Q3; turning-on of Q2 and Q3; turning-on of Q2 and Q4;

- turning-on of Q 1 and Q4; turning-on of Q2 and Q4; turning-on of Q2 and Q3; turning-on of Q1 and Q3;

Under the conditions for which the output voltage ripple is almost completely determined by the current ripple through the parasite resistance of the capacity itself (ESR), controlling the voltage peaks means controlling the peak of the sum of the two currents in the filter inductances.

The output voltage variation causes a change of the interruption instant of the energy transfer period. This action depends on the slope of the positive ripple ramp of the voltage, according to the relation:

$$\delta v_{out} = -\delta\phi \cdot \tan(\alpha) \qquad (1)$$

where $\delta\phi$ is the variation of the phase shift between the half-bridges e $\tan(\alpha)$ is the slope of the positive ripple of the output voltage:

$$\tan(\alpha) = \left(\frac{V_{in}}{n} - 2V_{out}\right)\frac{ESR \cdot T_s}{2L} \qquad (2)$$

To be able to control the modulator gain it is necessary to modify the crossing slope of the output voltage with the reference. To this purpose, through the converter DAC, frequency ramps $2f_{sw}$, can be generated, as shown in Figure 3. In reality, in so doing, the ramps will exhibit a stepped progress, possibly bevelled by the capacitive load at the output of the DAC. By changing the (1) the gain of the modulator Gm is obtained:

$$Gm = \frac{\delta v_{out}}{\delta \phi} = -\big(\tan(\alpha) + \tan(\beta)\big) \tag{3}$$

where $\tan(\beta)$ represents the compensation ramp slope.

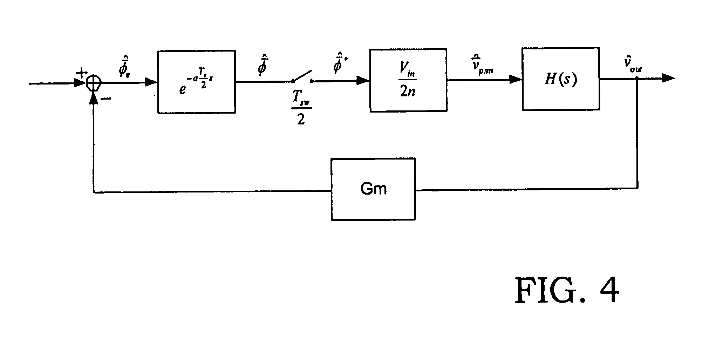

Figure 4 shows, schematically and in blocks, the control loop of the output voltage. The difference between the two phases does not affect the output voltage when supposing, in an approximation aim, that the current sharing exhibits dynamics orthogonal to that of common mode.

Moreover, the influence of the slope of the voltage ripple (2) on the gain is as much smaller as much higher the value $\tan(\beta)$ is with respect to the ($\alpha$).

One of the most important results of this control method is the attainment of the highest speed of response to the transients. While in an analogue voltage-mode control the sole thing which is decided is the phase shift between the waves PWM of the half-bridges, and thus the controller acts once for cycle, in the controller according to the invention the durations of the two energy transfer periods are determined independently, thus the controller acts at a frequency equal to 2fs.

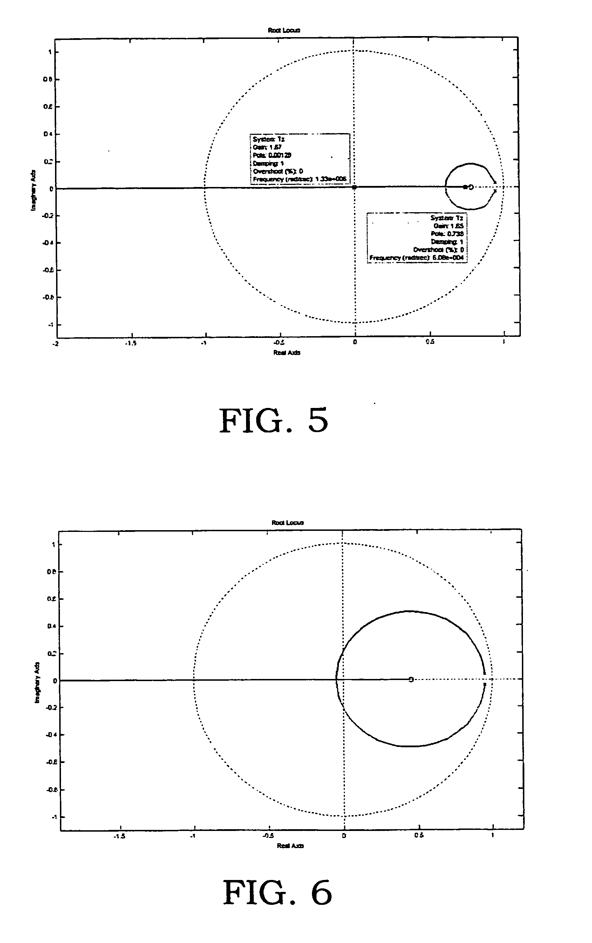

The study of the root locus is an instrument for the evaluation of the system dynamic performances. In particular, it is possible to understand the highest value that can be obtained by the closed loop band. This result is obtained when the high frequency pole reaches the unitary circle centre. From the calibration of the place of the roots in Figure 5 the multiplication factor from the loop gain which allows to obtain this position for the closed loop pole is obtained. From the same analysis also the position of the other pole is obtained, which shifts towards zero when the multiplication factor increases. A control of the Deadbeat type is roughly approximately obtained, wherein against a small signal disturbance, the system reacts going back to the steady condition in a single switching period. The closed loop band limit can overcome the limits allowed by the classic analogue voltage-mode.

If the system is disturbed by a big signal, as a transient can be due to the turning-on and to the turning-off of a load, the output voltage cannot meet the reference during the interval of a half-period. In this case the dynamics go out from the linear speed since the regulator is not able to supply the phase shift required. Under these conditions the converter operates with open loop and goes back to a steady condition at the highest speed allowed. When the output voltage goes back to cross the reference the regulator starts again to operate in linear area, performing the last part of the transient with the described dynamics. A non linear digital controller has thus been realised without quantization effects.

Afterwards, the influence has been evaluated of the time constant ESR*C on the loop stability. The zero introduced by the parasite resistance of the output capacity is in fact exploited to stabilise the control loop. It is important to evaluate the limits of this philosophy, besides which this control technique cannot be used any more.

By evaluating the root locus when the ESR varies diagrams are obtained as the one of Figure 6, obtained by reducing the value of the time constant ESR*C. It is noted how the migration of the poles in the Gauss plane follows a higher radius circumference. This would lead to instability if such circumferences crossed the unitary radius circle.

Under the conditions described instead the system is still stable, although responses without over-oscillations cannot obtained. This can be deduced from the fact that no gain values exist for which the high frequency pole is in the centre of the Gauss plane.

It is however possible to follow this track for example within the applications wherein the output voltage is of 48V and the sole capacitors that can be used are the aluminium electrolytes, which exhibit such an ESR that the root locus has the shape described in Figure 5 or in Figure 6.

The method according to the invention also provides a regulation of the difference between the currents.

In particular, to ensure that the currents in the two inductances in the Current-doubler do not diverge, the minimal datum which serves is an indication on the difference between the two currents. As it is known, connecting a RC network having the same time constant L/R given by the inductance and by its parasite resistance in parallel to an inductance, leads to having, across the capacity of the RC network, a voltage proportional to the current value in the inductance. In the Current-Doubler the two inductances, and thus the two inserted RC networks, share a node, the output. It is evinced thus that the voltage difference between the two central nodes of the RC networks is a triangular wave having double frequency with respect to that of switching and being proportional, instant by instant, to the difference of the two currents.

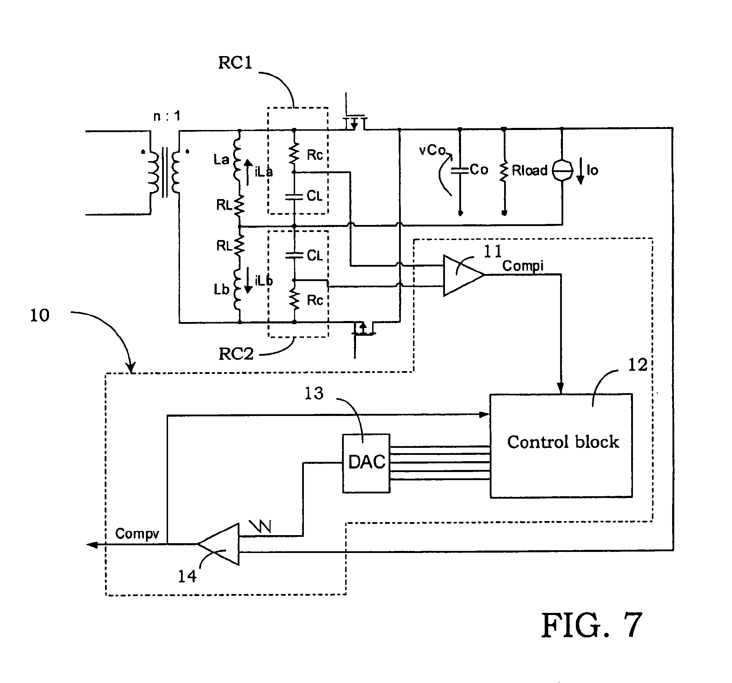

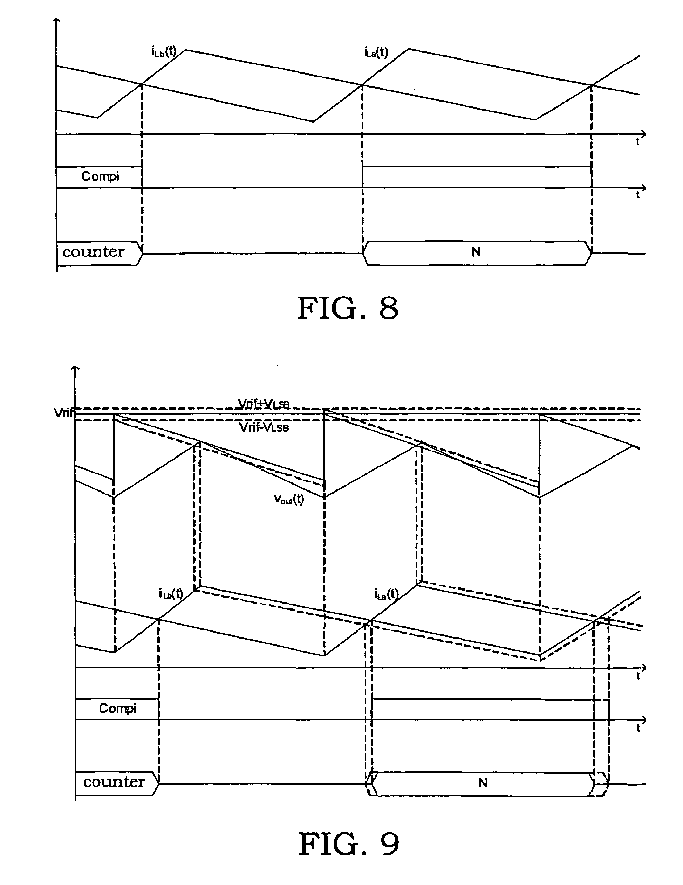

If then, as shown in Figure 7, these two nodes are brought at the input of a comparator 11 and, in a switching period, the time is measured wherein the output of the comparator 11 is high or low, under conditions of equal current, it will follow that the comparator 11 will have high output for half of the time. Thus, by controlling, with a counter, this duration, an indirect measure of the difference of the two mean currents follows. The wave forms describing the current sharing control are shown in Figure 8.

In particular, the comparator 11 exhibits respective input terminals connected to intermediate circuit nodes of a pair of RC networks, namely RC 1 and RC2, in turn connected in parallel to output inductances La, Lb of the converter 1.

The digital controller 10 according to the invention comprises a further comparator 14 output connected to a control block 12 and a D/A converter 13 connected between the control block 12 and the comparator 14.

In this way, a method for controlling the Full Bridge converter with a Current-Doubler

In particular, the energy recirculation phase comprises a turning-on step of the control transistors (Q1, Q2 and Q3, Q4) of the converter 1, in an alternate way in correspondence with the half-bridges S1 and S2.

Advantageously, the switch step is carried out in an asynchronous way with respect to the converter clock signal.

Moreover, the method comprises a further switch step from the energy recirculation phase to the transfer phase, carried out in a synchronous way with respect to the converter clock signal.

Also, the comparison step provides an information related to the difference between the currents flowing in inductances of said Current-Doubler, which is used to regulate a reference voltage provided to the D/A converter 13. In particular, this information is provided during two consecutive energy transfer periods, in a differential way, in order to regulate the difference between the currents.

The current sharing dynamics have a single pole linked to the inductances. The closed loop current-sharing can be thus compensated in a digital way by inserting another pole in the origin to have null error under steady conditions, and a zero to ensure the stability. A digital regulator PI will thus be used.

To decrease the difference between the two currents, the level of the reference converter D/A is increased or decreased in a differential way during both the energy transfer periods, which means increasing or decreasinge the duration of the same. In this case the regulator is able to supply discrete reference voltage levels, as much more frequent as much resolved the DAC is.

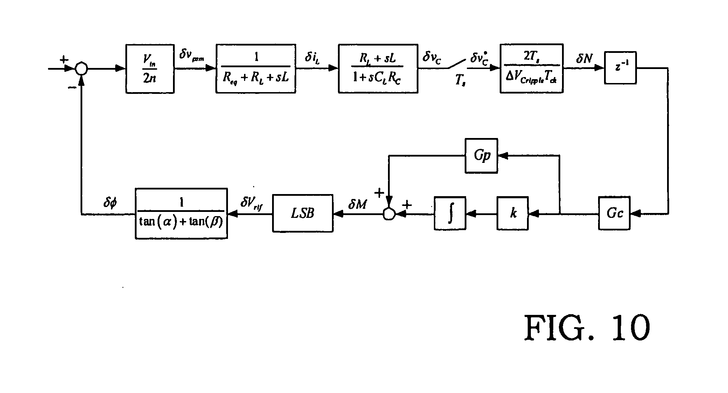

In order not to have evident limit cycles it is necessary that the information coming from the counter relative to a null difference between the two currents, can be obtained with at least two reference voltage levels. In relation to the wave forms in Figure 9 this would correspond to considering the current readings, which are obtained with the reference equal to $V_{rif}$, as being equal to each other and having a value of $V_{rif} \pm V_{LSB}$. This feature imposes a limit to the controllable minimal difference between the currents, which depends on the LSB width. In other words, the necessary condition so as not to create limit cycles is that the two adjacent reference voltage levels (i.e. having a distance of an LSB), do not affect the difference between the currents in such a way as to make the control intervene. Making reference to Figure 10, this imposes that a unitary variation of $\delta M$ corresponds to a variation of $\delta N < 1$ (being an entire number it means $\delta N = 0$):

$$V_{LSB} < V_{LSB, teorico} = \left( \tan \alpha + \tan \beta \right) \frac{2n}{V_{in}} \frac{R_{eq} + R_L}{R_L} \frac{\Delta V_{ripple} T_{ck}}{2T_s} \tag{4}$$

where $\Delta V_{Cripple}$ is the value of the voltage ripple on each capacitor of the current reading network, as shown hereafter.

In reality, the same effect can be obtained also with a higher LSB, by introducing a dead area in the digital control algorithm, whose effect is that of blocking the control action in the case the steady condition is near.

Once a highest acceptable value is chosen for the current difference in the inductances of the Current Doubler, not resulting in any control action, the value of $V_{LSB}$ is given by:

$$V_{LSB} = \left( \tan \alpha + \tan \beta \right) \frac{2n}{V_{in}} \left( R_{eq} + R_L \right) \delta i_L \tag{5}$$

To obtain the desired LSB value and to maintain the slope determined for the compensation ramp, it is necessary to use a converter D/A with a number of bits equal to:

$$N_{bit} = \log_2 \left( \frac{\tan \beta}{V_{LSB}} \right) \tag{6}$$

To realise the dead area in the control algorithm it is necessary to choose the gain of the proportional algorithm of the digital filter.

$$K_p = G_c \cdot G_p = \frac{1}{2^M} \qquad (7)$$

where

$$M = \log_2\left(\frac{V_{LSB}}{V_{LSB,theoretical}}\right)$$

The values of $V_{LSB}$ e$V_{LSB}$, theoretical are those calculated in equations (4) and (5), while Gc and Gp are the multiplication factor of the digital filter and the proportional gain term, shown in Figure 10.

The gain $G_c$ is still to be evaluated which affects the integral action of the digital filter. Such value strongly affects the control stability. To evaluate it precisely it is necessary to study the transfer function Gloop,i(z), by evaluating its diagrams of Bode and the root locus when the $G_c$ varies. The criterion to be followed for the sizing is that of obtaining a phase margin higher than 60°, without reducing the control closed loop band too much.

The study of the reactioned system allows the calibration of the digital filter PI. The block scheme of the current sharing loop is shown in Figure 10.

The first two blocks show the effect a difference between the phase shift causes on the difference of the currents in the Current-Doubler inductors. The dynamics are, according to a first approximation, orthogonal to that of common mode responsible for the variation of the output voltage. The transfer function between control variable and difference of currents is:

$$G_{i\phi}(s) = \frac{\delta i(s)}{\delta \phi(s)} = \frac{V_{in}}{2N}\left(\frac{1}{R_{eq} + R_L + sL}\right) \qquad (8)$$

where

$$R_{eq} = \frac{2L_r f_{sw}}{n^2}$$

The reading of the difference between the currents occurs as previously described and it can be assimilated to an all-pass filter with a pole and a zero, as much closer as much similar the time constants $L/R_L$ e $C_L R_C$ are:

$$\frac{\delta v_C(s)}{\delta i_L(s)} = \frac{R_L + sL}{1 + sC_L R_C} \cong R_L \qquad (9)$$

Downstream this stage the comparison occurs between the voltages representing the currents in the inductors. Against a variation between such voltages, the wave form at the output of the comparator will remain at the high logic level for a greater or smaller period of the amount:

$$\delta t = \frac{2T_s}{\Delta V_{Cripple}} \delta v_C \qquad (10)$$

where $\Delta V_{Cripple}$ is the voltage ripple value on each capacitor of the current reading network. If the time constants $L/R_L$ and $C_L R_C$ are equal, the voltage ripple is equal to:

$$\Delta V_{Cripple} = R_L \cdot \Delta I_{Lripple} \tag{11}$$

The period wherein the comparator output remains at high level it is measured by a counter, which works at the controller clock frequency. This latter should be much higher than the switching frequency so that the numeric value provided by the counter has a good resolution. From the value N determined by the counter the value corresponding to half of the switching period is deducted. In the pattern of small signal this operation is described by a variation of the value of N against a variation of t equal to:

$$\delta N = \frac{\delta t}{T_{ck}} \tag{12}$$

The numeric value obtained is processed by the digital filter by means of two algorithms. The first supplies a value proportional to $\delta N$, by means of the constant Gc. The second is realised by means of a register which is increased or decreased by $\pm 1$ on the basis of the counter having detected a value of N higher or lower than the reference. In this way an integral action is obtained which allows to nullify the error under steady conditions.

Even the integral control is regulated by means of a multiplication term, identified with K. In reality, as for how the integration algorithm is implemented, it can be precised that K depends on the width of $\delta N$ at the input. In particular the increasing and decreasing action of the register can be described by means of the coefficient:

$$K(\delta N) = \frac{1}{\delta N} \qquad \text{for} \qquad \delta N \neq 0$$

$$K(\delta N) = 0 \qquad \text{for} \qquad \delta N = 0 \tag{13}$$

From these relations it follows that the strongest integral action occurs in correspondence with the minimal value of $\delta N$, i.e. $\delta N = \pm 1$. The transfer function in the domain z is represented by:

$$H(z) = G_c \left( G_p + \frac{K \cdot z}{z - 1} \right) \tag{14}$$

which for K= 1 corresponds to

$$H(z) = G_c \left( \frac{(G_p + 1)z - G_p}{z - 1} \right) \tag{15}$$

The equations (14) and (15) represent the sum of the integral and proportional contributions. The resulting transfer function has a pole with null frequency and a zero.

At the output of the filter a numeric value is obtained which is used to decide the starting voltage of the ramps performing the control of the voltage peak in the two energy transfer intervals. From the point of view of the analysis of small signal, a variation of the value at the output of the digital filter, indicated with $\delta M$, causes a variation of the reference of a multiple of the LSB of the DAC, equal to:

$$\delta V_{rif} = -\delta M \cdot V_{LSB} \qquad (16)$$

The negative term means that the reference of the ramp relative to the half-period wherein the energy transfer excess had occurred is decreased. The control action occurs in the switching period subsequent to that wherein the difference between the currents $i_{La}$ and $i_{Lb}$ has been measured. For taking this delay term into consideration, a multiplication factor $z^{-1}$ is introduced in the calculation of $G_{loop}(z)$.

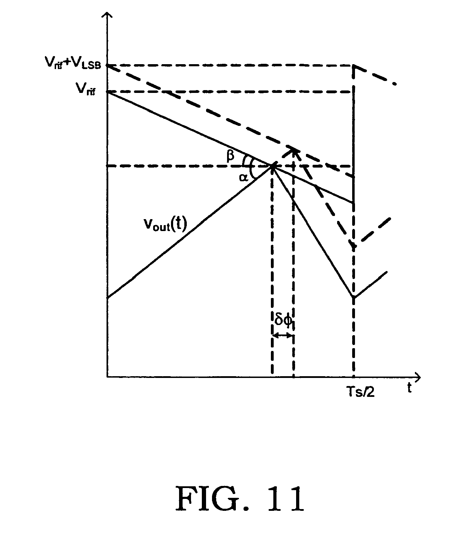

To be able to close the loop a last term is missing, which represents the gain between $\delta V_{rif}$ and $\delta\phi$, which can be calculated geometrically from the analysis of Figure 11.

$$\frac{\delta\phi}{\delta V_{rif}} = \frac{1}{\tan(\alpha) + \tan(\beta)} \qquad (17)$$

where $\tan(\alpha)$ is given by (2) and $\tan(\beta)$ is the slope of the compensation ramp.

The analysis of the stability of the reactioned system has been realised once again in the domain z. The transfer funciton between the control variable $\delta\phi$ and the current difference, represented by the voltage reading $\delta vc$, has been quantized for taking into consideration that the reading of the currents occurs once for cycle. This corresponds to a sampling of the variable $\delta vc$ with frequency $f_{sw}$.

The expression of the loop gain can be obtained from the previous equations and it is as follows:

$$G_{loop,i} = -\frac{1}{z} H(z) \cdot G_{v_c\phi}(z) \cdot V_{LSB} \left(\frac{1}{\tan(\alpha) + \tan(\beta)}\right)\left(\frac{2T_s}{R_L \cdot \Delta I_{Lripple} T_{ck}}\right) \qquad (18)$$

The coefficient K expresses in (13) will be always considered of unitary value, since in this way the worst case for the loop stability is supposed, corresponding to the most intense integral action.

Advantageously according to the invention, the digital controller according to the invention allows to implement useful additional functions with respect to two main control functions of the peak voltage and current-sharing regulation. It is the protection against overcurrent in the Current-Doubler inductances and the fine regulation of the output voltage.

During all the converter operation conditions, and especially during the transients, the existance of a protection mechanism against overcurrent is necessary, which interrupts the energy transfer to the load.

The voltage signals used for the current sharing indicate, instant by instant, the current value in the Current-Doubler inductances. By comparing each of these signals with a voltage reference equivalent to the highest current provided for each winding, a signal is obtained which can be used for instantaneously interrupting the energy transfer.

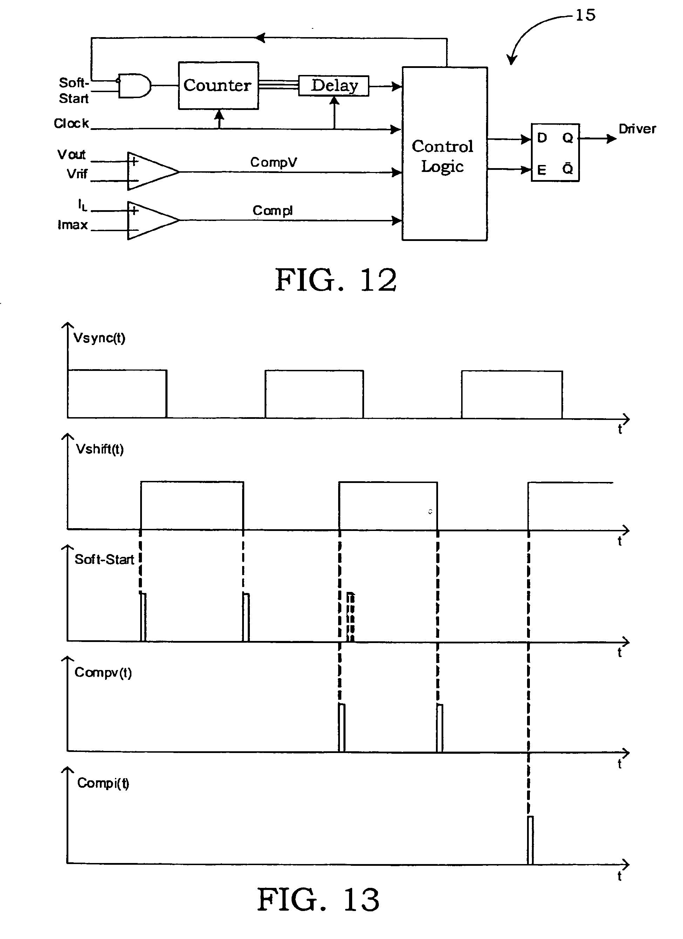

As shown in Figure 12, this signal is treated by the control logic 15 as those coming from the output voltage regulation and from the Soft-Start. Once again, inside each half-period, the first signal which is affirmed determines the start of the recirculation phase. Figure 13 exemplifies the wave forms typical of this control strategy. The control logic 15 is also suitable to interrupt an output energy transfer in case of overcurrent.

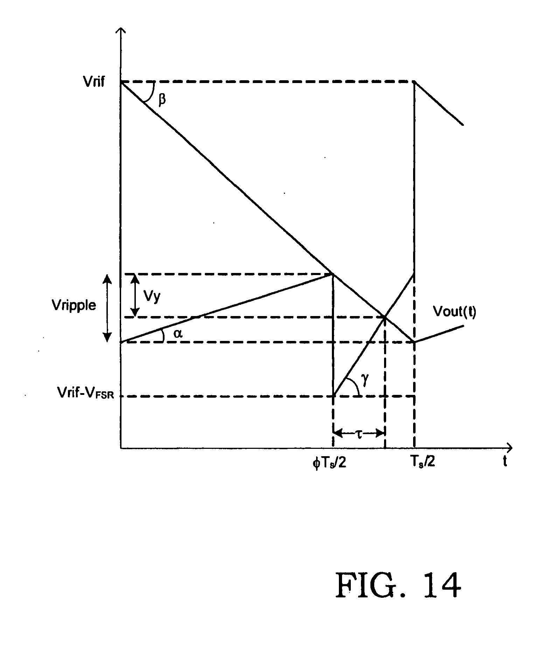

The voltage control above described regulates the peak value of the output voltage. The corresponding mean value depart therefrom of an amount equal to half the output voltage ripple. To try and eliminate any type of error known a priori a fine regulation algorithm of the output voltage has been realised. The corresponding waveforms are shown in Figure 14.

This type of calibration is carried out only once, at the turn-on of the controller after the Soft-Start phase. The realisation is carried out by means of an estimate of the voltage ripple below the hypothesis that the converter has a very low output impedance under all the operative conditions. It follows that the phase shift between the half-bridges does not vary that much between the high or low load conditions. It is to be noted that also the voltage ripple does not depend, according to a first approximation, on the load.

Accordingly, the control method of the invention comprises a step of fine regulation of the output voltage by means of an algorithm performing an estimation of a ripple measure of this output voltage by generating voltage reference signals.

The ripple estimate is realised with the following strategy: when the singal Compv(t) is affirmed, the DAC is sent to the highest output dynamics, equal to $V_{FSR}$, and it is made to perform a predetermined positive slope ramp equal to $\tan(\gamma)$. With reference to Figure 14 the value of the voltage ripple can be obtained through the relation:

$$V_{ripple} = \frac{V_y \left(1-\phi\right)\frac{T_s}{2}}{\tau} \qquad (19)$$

where $\tau$ is calculated from the measure of the duration of the signal Compv(t)=1 and Vy is calculated as:

$$V_y = V_{FSR} - \tan(\beta) \cdot \phi \cdot \frac{T_s}{2} - \tan(\gamma) \cdot \tau \qquad (20)$$

The algorithm performs the ripple measure until, for three consecutive intervals, the same value is obtained. This allows to avoid that the single measure, possibly affected by disturbances, can supply a non reliable value. Further the reference voltage is regulated so that the mean voltage is equal to:

$$\overline{V}_{out} = V_{rif} - \tan\left(\beta\right) \cdot \phi \cdot \frac{T_s}{2} - \frac{1}{2}V_{ripple} \qquad (21)$$

In conclusion, the control method and the digital controller according to the invention use the instants when the output voltage reaches the reference value to switch from a transfer phase to an energy recirculation phase and they realise, in such way, a peak voltage control.

Moreover, since the switches occur in a synchronous way with the occurances of the reference overcoming by the output voltage, but in an asynchronous way with the system clock, having a discrete number of suppliable phase shifts and using a digital modulator PWM is avoided.

Still advantageously according to the invention, the switching from recirculation periods to energy transfer periods occurs instead in a synchronous way with the system clock, obtaining an absolutely fixed switch frequency.

Moreover, advantageously according to the invention, the proposed control method allows to obtain the highest speed of response to the transients. In particular, while in a control method of the analogue voltage-mode type the sole thing which is decided is the phase shift between the waves PWM of the half-bridges, and thus the controller acts once for cycle, the controller based on the method according to the invention determines independently the durations of the two energy transfer periods, thus the controller acts at frequency $2f_s$.

The method according to the invention also provides a regulation of the difference between the currents, for ensuring that the currents in the two inductances in the Current-doubler do not diverge, by using the RC networks, namely RC1 and RC2, connected at the input of the digital controller.

Finally, advantageously according to the invention, the digital controller implements the additional functions of protection against overcurrent in the Current-Doubler inductances and of fine regulation of the output voltage.

**Claims**

1. Method for controlling a Full Bridge converter (1) with a Current-Doubler of the type comprising at least a first and a second half-bridge of diodes (S1, S2) connected to respective control transistors (Q1, Q2; Q3, Q4), the method comprising the steps of:

   - detecting a reference value;
   - comparing, instant by instant, said reference value with an output voltage value of said converter (1) also providing an information related to the difference between the currents flowing in inductances of said Current-Doubler;
   - carrying out a switching from a transfer phase to an energy recirculation phase in correspondence with instants when said output voltage value reaches said reference value; and
   - regulating a reference voltage provided to a D/A converter comprised in said Full Bridge converter by using said information related to the difference between the currents flowing in inductances of said Current-Doubler, said reference voltage being provided during two consecutive energy transfer periods, in a differential way, in order to regulate the difference between the currents.

**2.** Control method according to claim 1, **characterised in that** said switching from the transfer phase to the energy recirculation phase in correspondence with instants when said output voltage value reaches said reference value controls the peak value of an output voltage of the Full Bridge converter.

**3.** Control method according to claim 1, **characterised in that** said energy recirculation phase comprises a turning-on step of said control transistors (Q1, Q2; Q3, Q4) of said converter (1).

**4.** Control method according to claim 3, **characterised in that** said turning-on step of said control transistors (Q1, Q2; Q3, Q4) is carried out in an alternate way in correspondence with said half-bridges (S1, S2).

**5.** Control method according to claim 1, **characterised in that** said switch step is carried out in an asynchronous way with respect to a clock signal of said converter (1),

**6.** Control method according to claim 1, **characterised in that** it comprises a further switch step from said energy recirculation phase to said transfer phase.

**7.** Control method according to claim 6, **characterised in that** said further switch step is carried out in a synchronous way with respect to a clock signal of said converter (1).

**8.** Digital controller for a Full Bridge converter with Current-Doubler of the type comprising at least a first and a second half-bridges of diodes (S1, S2) connected to respective control transistors (Q1, Q2; Q3, Q4), the digital controller comprising:

- at least one comparator (11) having respective input terminals connected to intermediate circuit nodes of a pair of RC networks (RC1, RC2) in turn connected, in parallel, to output inductances of said converter (1);
- a further comparator (14) having an output connected to a control block (12) of said digital controller (10);
- a D/A converter (13) connected between said control block (12) and said further comparator (14); and
- a control logic (15) suitable to interrupt an output energy transfer in case of overcurrent.

**Patentansprüche**

**1.** Verfahren zum Steuern eines Voll-Brückenwandlers (1) mit einer Stromverdopplungseinrichtung in der Bauart mit wenigstens einer ersten und einer zweiten Halb-Brücke aus Dioden (S1, S2), die mit jeweiligen Steuertransistoren (Q1, Q2; Q3, Q4) verbunden sind, wobei das Verfahren die Schritte aufweist:

- Detektieren eines Bezugswerts;
- Vergleichen, Augenblick für Augenblick, den Bezugswert mit einem Ausgangsspannungswert des Wandlers (1) außerdem Bereitstellen einer Information betreffend die Differenz zwischen den Strömen, die in Induktivitäten der Stromverdopplungseinrichtung fließen;
- Ausführen eines Schaltens von einer Transferphase zu einer Energierezirkulationsphase entsprechend Augenblicken, in denen der Ausgangsspannungswert den Bezugswert erreicht; und
- Regeln einer Bezugsspannung, die einem D/A-Wandler bereitgestellt wird, der in dem Voll-Brücken-Wandler vorgesehen ist, durch Verwenden der Informationen betreffend die Differenz zwischen den Strömen, die in Induktivitäten der Stromverdopplungseinrichtung fließen, wobei die Bezugsspannung während zwei aufeinanderfolgender Energietransferperioden differenziell bereitgestellt wird, um die Differenz zwischen den Strömen zu regeln.

**2.** Steuerverfahren gemäß Anspruch 1, **dadurch gekennzeichnet, dass** das Schalten von der Transferphase zu der Energierezirkulationsphase entsprechend Augenblicken, in denen der Ausgangsspannungswert den Bezugsspannungswert erreicht, den Spitzenwert einer Ausgangsspannung des Voll-Brücken-Wandlers steuert.

**3.** Steuerverfahren gemäß Anspruch 1, **dadurch gekennzeichnet, dass** die Energierezirkulationsphase einen Einschaltschritt der Steuertransistoren (Q1, Q2; Q3, Q4) des Wandlers (1) aufweist.

**4.** Steuerverfahren gemäß Anspruch 3, **dadurch gekennzeichnet, dass** der Einschaltschritt der Steuertransistoren (Q1, Q2; Q3, Q4) alternativ entsprechend den Halb-Brücken (S1, S2) durchgeführt wird.

**5.** Steuerverfahren gemäß Anspruch 1, **dadurch gekennzeichnet, dass** der Schaltschritt asynchron bezüglich eines Taktsignals des Wandlers (1) ausgeführt wird.

**6.** Steuerverfahren gemäß Anspruch 1, **dadurch gekennzeichnet, dass** es einen weiteren Schaltschritt von der Energierezirkulationsphase zu der Transferphase aufweist.

**7.** Steuerverfahren gemäß Anspruch 6, **dadurch gekennzeichnet, dass** der weitere Schaltschritt synchron bezüglich eines Taktsignals des Wandlers (1) durchgeführt wird.

**8.** Digitale Steuereinrichtung für einen Voll-Brücken-Wandler mit Stromverdopplungseinrichtung in der Bauart aufweisend wenigstens eine erste und eine zweite Halb-Brücke aus Dioden (S1, S2), die mit jeweiligen Steuertransistoren (Q1, Q2; Q3, Q4) verbunden sind, wobei die digitale Steuereinrichtung aufweist:

- wenigstens einen Komparator (11) mit jeweiligen Eingangsanschlüssen, die mit Zwischenschaltkreisknoten eines Paares von RC-Netzwerken (RC1, RC2) verbunden sind, die wiederum parallel mit Ausgangsinduktivitäten des Wandlers (1) verbunden sind;
- einen weiteren Komparator (14) mit einem Ausgang, der mit einem Steuerblock (12) der digitalen Steuereinrichtung (10) verbunden ist;
- einen D/A-Wandler (13), der zwischen den Steuerblock (12) und den weiteren Komparator (14) geschaltet ist; und
- eine Steuerlogik (15), die geeignet ist, einen Ausgangsenergietransfer im Falle eines Überstroms zu unterbrechen.

**Revendications**

**1.** Procédé de commande d'un convertisseur à pont intégral (1) avec un doubleur de courant du type comprenant au moins un premier et un second demi-pont de diodes (S1, S2) reliés à des transistors de commande respectifs (Q1, Q2 ; Q3, Q4), le procédé comprenant les étapes qui consistent à :

détecter une valeur de référence ;
comparer, instant par instant, ladite valeur de référence avec une valeur de tension de sortie dudit convertisseur (1) fournissant également une indication relative à la différence entre les courants circulant dans les inductances dudit doubleur de courant ;
opérer une commutation d'une phase de transfert vers une phase de recirculation d'énergie en correspondance avec les instants où ladite valeur de tension de sortie atteint ladite valeur de référence ; et
réguler la tension de référence fournie à un convertisseur N/A compris dans ledit convertisseur à pont intégral en utilisant ladite indication relative à la différence entre les courants circulant dans les inductances dudit doubleur de courant, ladite tension de référence étant fournie pendant deux périodes consécutives de transfert d'énergie, d'une manière différentielle, afin de réguler la différence entre les courants.

**2.** Procédé de commande selon la revendication 1, **caractérisé en ce que** ladite commutation de la phase de transfert vers la phase de recirculation d'énergie en correspondance avec les instants où ladite valeur de tension de sortie atteint ladite valeur de référence commande la valeur maximale de la tension de sortie du convertisseur à pont intégral.

**3.** Procédé de commande selon la revendication 1, **caractérisé en ce que** ladite phase de recirculation d'énergie comprend une étape d'activation desdits transistors de commande (Q1, Q2 ; Q3, Q4) dudit convertisseur (1).

**4.** Procédé de commande selon la revendication 3, **caractérisé en ce que** ladite étape d'activation desdits transistors de commande (Q1, Q2 ; Q3, Q4) est effectuée d'une manière alternée en correspondance avec lesdits demi-ponts (S1, S2).

**5.** Procédé de commande selon la revendication 1, **caractérisé en ce que** ladite étape de commutation est effectuée d'une manière asynchrone par rapport à un signal d'horloge dudit convertisseur (1).

**6.** Procédé de commande selon la revendication 1, **caractérisé en ce qu'**il comprend une étape supplémentaire de commutation de ladite phase de recirculation d'énergie vers ladite phase de transfert.

7. Procédé de commande selon la revendication 6, **caractérisé en ce que** ladite étape supplémentaire de commutation est effectuée d'une manière synchrone par rapport à un signal d'horloge dudit convertisseur (1).

8. Régulateur numérique pour un convertisseur à pont intégral avec un doubleur de courant du type comprenant au moins un premier et un second demi-ponts de diodes (S1, S2) reliés à des transistors de commande respectifs (Q1, Q2 ; Q3, Q4), le régulateur numérique comprenant :

au moins un comparateur (11) ayant des bornes d'entrée respectives connectées à des noeuds de circuit intermédiaires d'une paire de réseaux RC (RC1, RC2) eux-mêmes connectés, en parallèle, aux inductances de sortie dudit convertisseur (1) ;
un autre comparateur (14) ayant une sortie connectée à un bloc de commande (12) dudit régulateur numérique (10) ;
un convertisseur N/A (13) connecté entre ledit bloc de commande (12) et ledit autre comparateur (14) ; et
une logique de commande (15) apte à interrompre un transfert d'énergie de sortie en cas de surintensité.

FIG. 1

FIG. 2

FIG. 3

FIG. 4

Root Locus

System: Tz
Gain: 1.57
Pole: 0.00129
Damping: 1
Overshoot (%): 0
Frequency (rad/sec): 1.33e+006

System: Tz
Gain: 1.55
Pole: 0.738
Damping: 1
Overshoot (%): 0
Frequency (rad/sec): 6.08e+004

Imaginary Axis

Real Axis

## FIG. 5

Root Locus

Imaginary Axis

Real Axis

## FIG. 6

FIG. 7

FIG. 8

FIG. 9

FIG. 10

FIG. 11

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040136209 A
- US 6400580 B, Bowman

- US 6469481 B